# EUROPEAN PATENT SPECIFICATION

(11) **EP 1 863 145 B1**
(45) Date of publication and mention of the grant of the patent: **25.03.2009**
(21) Application number: 07075414.8
(22) Date of filing: 30.05.2007
(51) Int. Cl.: H02G 3/08

(54) **Box for electric wirings**
Dose für Elektroverdrahtungen
Boîtier pour câblage électrique

(30) Priority: 31.05.2006 NL 1031925; 14.12.2006 NL 1033055
(43) Date of publication of application: 05.12.2007
(73) Proprietor: ABB B.V., 6716 AA Ede (NL)
(72) Inventor: Kuipers, Johannes Doede Hendrik, 6714 GE Ede (NL)
(74) Representative: De Hoop, Eric

(56) References cited:
- DE-A1- 3 008 197
- NL-C2- 1 001 924

## Description

### BACKGROUND OF THE INVENTION

The invention relates to a box for electric wirings. The invention particularly relates to a so-called distribution junction box or junction box.

Such a box is for instance known from Dutch patent specification 1.001.924, and may be cylindrical or block-shaped. Said known box is provided with a bottom and circumferential wall provided with at least one passage opening that is suitable to allow a draw spring through. The box is also provided with ribs for counteracting movement of the draw spring in circumferential direction in the ox, which ribs extend up to the wall of the box.

Although the known box makes working with a draw spring easier, in actual practice it turned out that in some cases the draw spring may still get stuck, or is not sufficiently guided and that it is difficult to introduce the draw spring immediately in the correct spout or passage opening.

It is an object of the present invention to provide an alternative box with which a draw spring getting stuck is further avoided, and with which the guiding of the draw spring is further improved.

Distribution junction boxes serve as branching location for electric wirings in a floor. For that purpose the distribution junction boxes are provided with a number of spouts for connection of installation pipes in which the wirings are accommodated. The boxes may have a circular or rectangular cross-section.

In construction, floors are often built up from prefab concrete slabs, particularly so-called precast wide planks or precast concrete planks. Such slabs comprise a bottom layer or shell of concrete, in which reinforcement is incorporated, wherein often the lower ends of the upwardly extending open web steel beams have been poured along in concrete. In the construction the slab also has the function of shuttering for the concrete to be poured thereon for making the floor.

When manufacturing the precast wide planks, distribution junction boxes may already be incorporated therein at the desired location. The distribution junction boxes are then positioned at the correct location prior to pouring concrete, its gates or spouts above the upper surface of the concrete slab or precast wide plank to be poured. For that purpose the concrete manufacturer selects distribution junction boxes having the correct height for the concrete slab in question. The concrete manufacturer therefore needs to keep a wide variety of distribution junction boxes in stock. After placing the slab in situ the pipes are laid out on the slab and are connected to the gates or spouts according to need. For the wiring activities the electrician should take the box placed by the concrete manufacturer as starting point.

After laying the installation pipes a cover layer or beaching of concrete is poured onto the concrete slab.

It is an object of the invention to provide a distribution junction box which makes adjustment to the electrician's wishes easier.

It is an object of the invention to provide a distribution junction box, which simplifies the stock keeping for the concrete manufacturer.

It is an object of the invention to provide a distribution junction box which simplifies the manufacturing of concrete slabs, particularly precast wide planks, to be provided with distribution junction boxes.

### SUMMARY OF THE INVENTION

According to a first aspect, the invention provides a box according to claim 1. The problem of the increased risk of the draw spring getting stuck and the problem of decreased guidance of the draw spring in the box according to NL-C-1.001.924 turns out to be caused by the ribs being perpendicular to the bottom of the box, as a result of which at that location a draw spring is not guided resulting in a risk of the draw spring getting stuck. By, according to the invention, instead of via said corner having the ribs smoothly, that means without a buckle, corner or stop shoulder between the rib and bottom, change into the bottom of the box, said problems are at least partially solved.

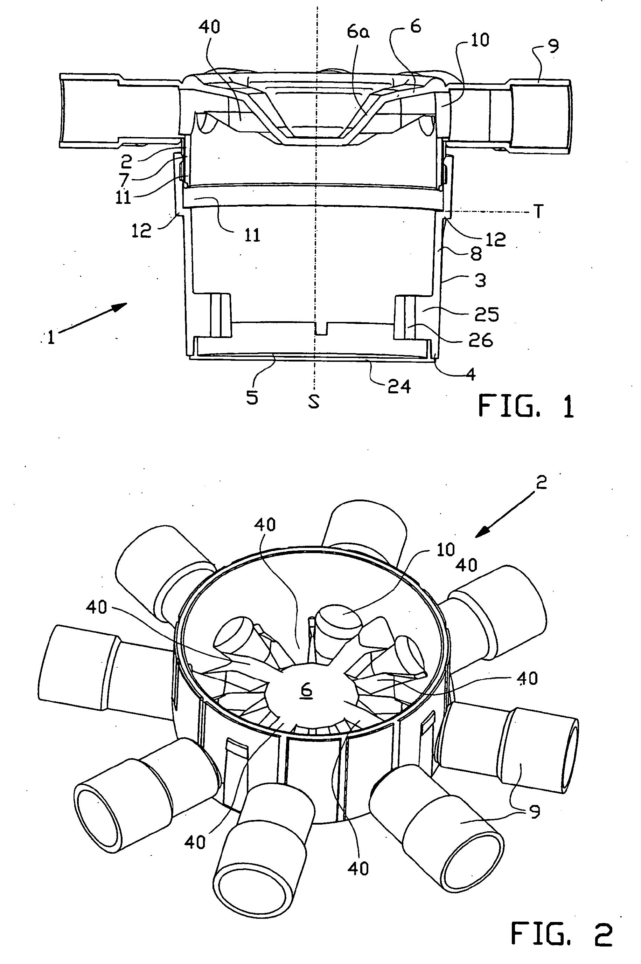

An optimal guidance of a draw spring is realised in one embodiment of a box having several passage openings, when the box for each passage opening, contains a relating pair of ribs. As shown in figure 2 of NL-C-1.001.924 two adjacent passage openings have two ribs that are communal for these two passage openings. As a result no guidance is possible at the location of the wall section separating these two passage openings. The present invention improves this by providing each passage opening with their own pair of relating ribs.

The object is achieved in accordance with a second aspect of the invention, by providing a box according to claim 3.It is particularly advantageous when the ribs smoothly change into the bottom of the box.

The box as known from NL-C-1.001.924 contains a conical elevation which via a corner or buckle changes into the bottom of the box. In actual practice it turned out that it is possible that a draw spring may get stuck in this corner. In one embodiment of the box according to the invention this getting stuck is prevented because the elevation, preferably in circumferential direction, smoothly changes into the bottom of the box. The invention thus also relates to a box for accommodating wires of electric wirings comprising a bottom and a circumferential wall provided with at least one passage opening suitable to allow a draw spring through, and with ribs for counteracting movement of the draw spring in circumferential direction in the box, which ribs extend up to the wall of the box, wherein the box has been provided with an elevation projecting from the bottom of the box, from which elevation the ribs extend, wherein the elevation smoothly changes into the bottom of the box.

A particularly good guidance of a draw spring is realised when the pair of ribs and the bottom form a duct, ascending towards the centre of the box. It is particularly advantageous when the duct narrows towards the centre of the box. For an optimal guidance of a draw spring it is advantageous when the duct is just large enough for accommodating a draw spring, optionally with wires tied thereto.

A draw spring or stiff wires that are inserted through an insertion opening, may when entering the inside of the box be bent away sideways to for instance the installation opening of the box when at least a part of the internal bounding surface of the duct has a concave shape that is substantially supplementary to a conical shape or tapered shape.

The insertion and retraction of a draw spring and optionally other electricity wires in the box is simplified when the passage openings have been provided with spouts extending outward from the wall of the box.

In one embodiment thereof the internal bounding surface of the duct has a bottom area at the side of the circumferential wall that extends at a small angle to a centre line of the spout in question to which the duct connects, wherein the small angle preferably is smaller than 30°, preferably smaller than 20°, preferably smaller than 10°. Due to the small angle for instance the draw spring when entering experiences no or only a slight resistance force oriented in its axial direction, whereas the spring is indeed already urged to an installation opening of the box.

In an alternative or further embodiment thereof the internal bounding surface of the duct at the side of the circumferential wall extends in circumferential direction according to a smooth curve, preferably a concave curvature. When entering the draw spring experiences only slight resistance, even when, for instance, it is pushed slightly in circumferential direction against a bounding surface of the duct for instance by rigid electricity wires introduced via another insertion opening.

In a preferred embodiment of the invention the circumferential wall at the side facing away from the bottom has a circumferential edge that defines an access opening to the inside of the box, wherein the circumferential wall has been provided with one or more passages for installation wires that may or may not be closed, wherein the box is divided into a first box member and a second box member to be connected thereto, wherein the division is according to a dividing line situated between the circumferential edge and the passages, wherein the first box member has been provided with the passages.

With the box according to this embodiment of the invention the concrete manufacturer is able to position the second box member in the concrete slab to be made. He only needs to keep second box members in stock that are adapted to various slab thicknesses. As the second box members will usually be tubular, such a stock is easy to keep.

An electrician can keep first box members in stock, that differ from each other as regards the number of passages, as regards the shape of the spouts, gates and the like. The electrician is thus able to choose for himself what the wanted embodiment of the box should be. He need not settle said embodiment with the concrete manufacturer beforehand, and has a large degree of freedom here.

An additional advantage is that no fragile box members, provided with spouts, protrude from the concrete slabs when they are transported to the building site.

In a simple embodiment of the box according to the invention the dividing line extends in a plane parallel to the circumferential edge.

Both box members, at their respective first and second edge situated near the dividing line, may be provided with first and second connection means that cooperate together.

In one embodiment the first and second connection means are adapted for mutual connection by a translatory motion from the first box member to the second box member, as a result of which the connection can be effected very quickly. It is preferred then that the first and second connection means are adapted for forming a snap connection.

The first and second connection means may be adapted for allowing both box members to rotate with respect to each other. When placing the first box member the orientation of the first box member as a result need not be paid so much attention to.

The aspects and measures described in this description and claims of the application and/or shown in the drawings of this application may where possible also be used individually. Said individual aspects, and other aspects, may be the subject of divisional patent applications relating thereto. This particularly applies to the measures and aspect that have been described per se in the sub claims.

### SHORT DESCRIPTION OF THE DRAWINGS

The invention will be elucidated on the basis of a number of exemplary embodiments shown in the attached drawings, in which:
Figure 1 shows a cross-section of a first exemplary embodiment of a distribution junction box according to the invention;
Figure 2 shows a view in perspective of the distribution junction box of figure 1;
Figure 3 shows a detail of the distribution junction box of figure 1;
Figures 4A-D show consecutive steps in placing and fitting a distribution junction box according to the invention;
Figure 5 shows a cross-section of a second exemplary embodiment of a box according to the invention;
Figure 6 shows a view in perspective of the box according to figure 5;
Figure 7 shows a bottom view in perspective of the box of figure 5; and

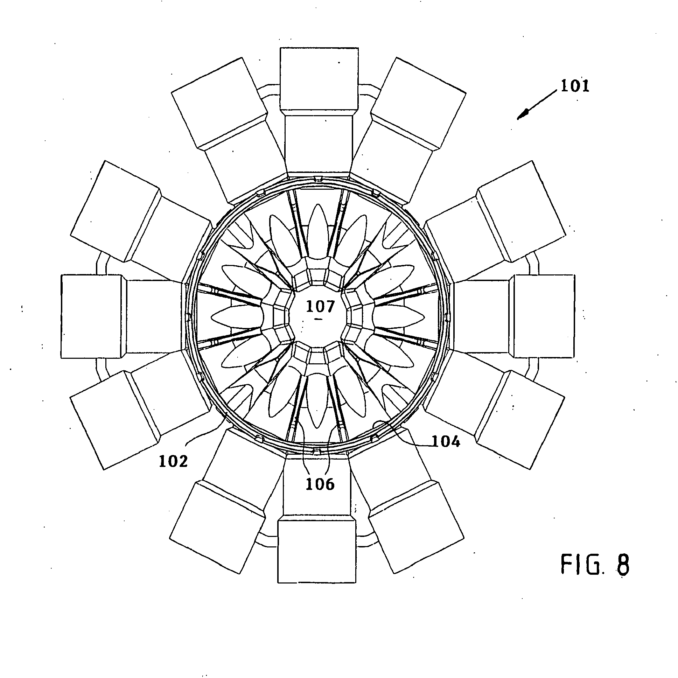

Figure 8 shows a top view of the box of figure 5.

### DETAILED DESCRIPTION OF THE DRAWINGS

The distribution junction box 1 according to a first embodiment of the invention as shown in figures 1-4, is made of synthetic material, and at the location of a dividing surface T divided into a first box member 2 and a second box member 3. The box 1 has a centre line S. The first box member 2 is provided with a bottom wall 6, having an elevation 6a that is situated centrally therein. The first box member 2 comprises a circumferential wall 7 integrally formed with the bottom wall 6, at which circumferential wall 7 a series of spouts 9 have been formed, which spouts 9 extend in various different directions. Via openings 10 the spouts 9 end in the inside of the first box member 2.

The bottom wall 6 has been provided with ribs 40 that extend radially with respect to the circumferential wall 7. Per opening 10 the box 1 contains a relating pair of ribs 40. The side walls of the ribs 40 and the bottom side of the elevation 6a define a duct per opening 10, which duct in the embodiment shown narrows towards the centre and with the bottom side ascends towards the centre. As a result a proper guidance of a draw spring is realised when it is introduced from the outside of the box 1 to inside and through an opening 10. The ribs 40 smoothly change into the bottom 103 of the box 1, so that an even better guidance of the draw spring is realised. The dimension of the duct here is exactly large to be able to accommodate a draw spring.

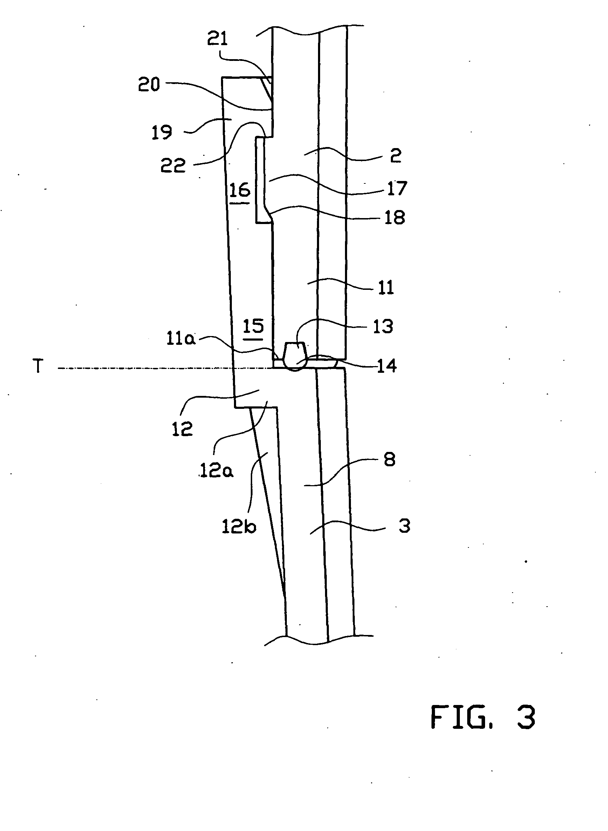

The second box member 3 is substantially straight circular cylindrical with circumferential wall 8, and comprises an end edge 4 defining an opening 5, which can be (temporarily) closed by a lid 24. The opposite second edge 12 of the second box member 3 is step-shaped, as can also be seen in figure 3, having a radial wall 12a, which for reinforcement has been connected via reinforcements 12b to wall 8 and changes into a wall 15 extending in the box centre line direction S, which wall 15 changes into a snap edge 16 extending further also in the box centre line direction. At its end the snap edge 16 is provided with a radially inwardly facing thickening 20 that is bounded by a pilot edge 21 and a confining edge 22, see figure 3.

Instead of a continuing snap edge 16, an in circumferential direction encircling series of snap lips may also have been provided, which have a suitably resilient design.

At the side facing away from the bottom 6, the first box member 2 is provided with a first edge 11, further shown in figure 3. The edge 11 is provided with one or more cams 17 that extend radially to the outside, each cam having a pilot edge 18. The cams 17 may in one embodiment form a rib continuing in circumferential direction. In the plane 11a oriented in box centre line direction S, the first edge 11 is provided with a circumferential groove 13, in which a ring 14 of sealing material is accommodated.

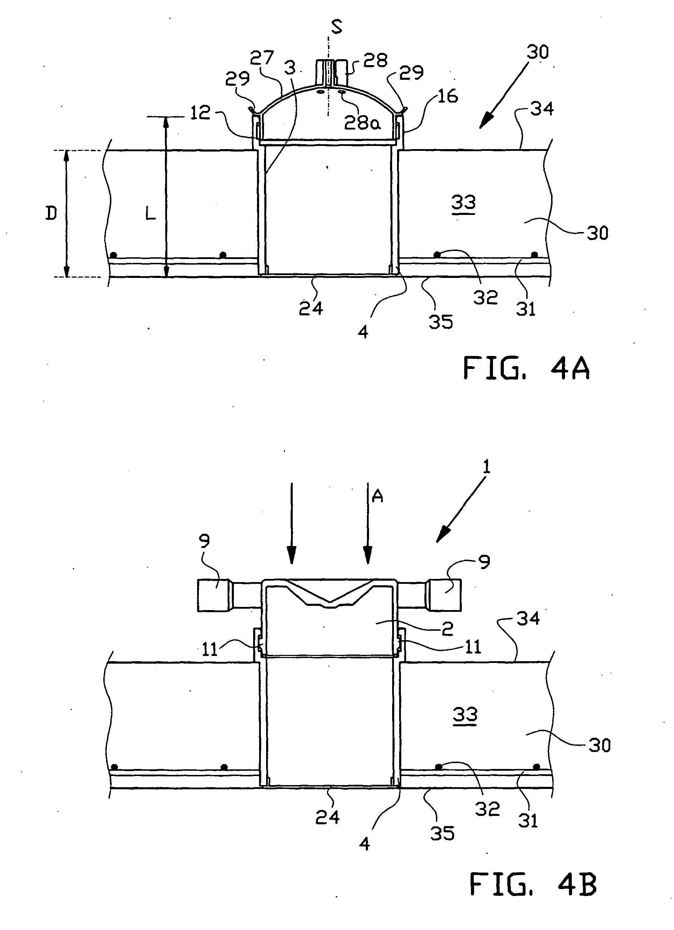

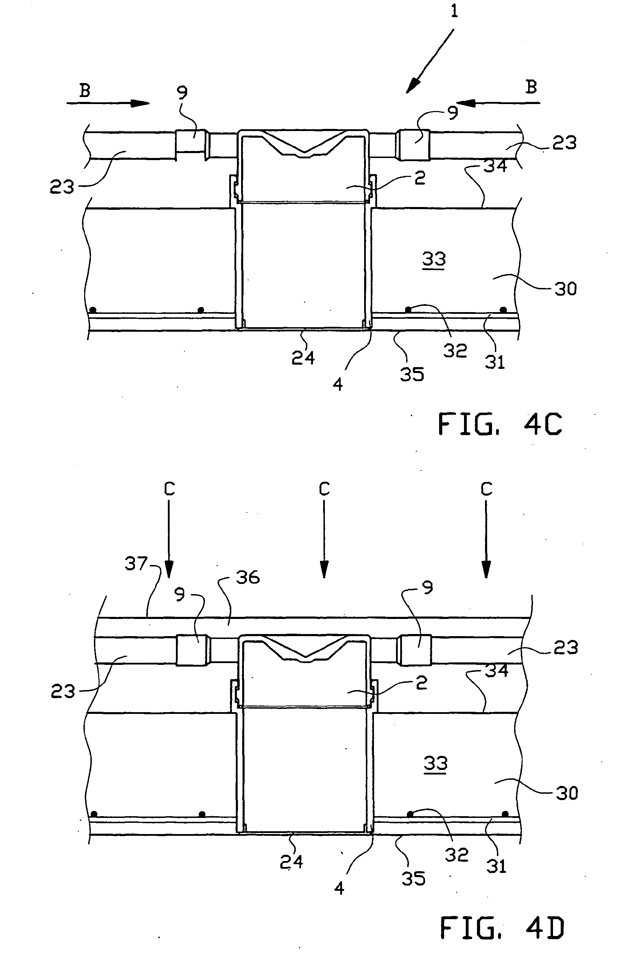

During use, the concrete manufacturer selects the second box member 3 from a stock of second box members having a different length L in the direction of the centre line S. As can be seen in figure 4A, for a precast wide plank or concrete slab 30 to be prefabricated and having a thickness D, a second box member 3 having a tube length L will be selected, equalling or exceeding the dimension D. At the upper edge 16 a lid 27 is temporarily placed, which lid is dome-shaped and at the top provided with little tubes 28 with de-aeration ducts 28a. At the edge, the lid 27 is provided with integrally formed eyes or hooks 29, for aids, such as wires or elastic bands, for adjusting box member 3. Box member 3 is placed in a mould with the longitudinal and transverse reinforcement 31, 32, after which concrete is poured in (optional open web steel beams are not shown). The lids 27 and 24 prevent concrete/water from entering into the box member 3.

Then the concrete is poured, up to the upper edge of the snap edge 16 at a maximum. After the concrete 33 has set, a reinforced concrete slab 30 is obtained, having a bottom surface 35 and top surface 34. The edge 4 is in the plane 35, and the snap edge 16 protrudes -in this example upwards from the surface 34. The lid 27 can be removed by taking the little tubes 28.

In this condition the precast wide plank or concrete slab 30 is transported to the building site, and placed there, for instance on a number of supporting walls. After an entire floor has thus been laid, the electricity wiring activities in the building, as regards the floor, can be started. For that purpose the electrician has selected a suitable box member 2 from a stock of first box members 2, having the wanted number and direction of spouts. The electrician places the box member 2 in the direction A on the box member 3 incorporated in the concrete slab 33, wherein the pilot edges 18 due to cooperation with pilot edge 21 bend the snap edge 16 slightly outwards, until the cams 17 get just beyond the confining edge 22, and in the situation of figure 3, the first box member 2 is snapped fixed onto the second box member 3 that is fixedly incorporated in the concrete slab 33. The sealing ring 14 is then pressed in, so that a leakage path between both box members 2 and 3 is closed off. The situation shown in figure 4B is then achieved. The electrician then places electric wiring lines 23 by inserting them in the direction B into the spouts 9. The electric wiring lines then lie over and on top of the top surface 35 of the concrete slab 33.

After all electric wiring lines have been laid like that, and other facilities have been placed on the concrete slab 33, the floor can be poured with a cover layer or beaching, by pouring concrete 36 in the direction C onto the surface 34 of the concrete slab 33. After the confined concrete 36 has set the electric wiring lines 23 and also the bottom 6 of the first box member 2 are beneath the top surface 37 of the concrete floor. The step 12a in the plate, after it is being used as a ceiling, forms a security against pulling the second box member out of the ceiling as a result of high weight forces, for instance heavy light fittings.

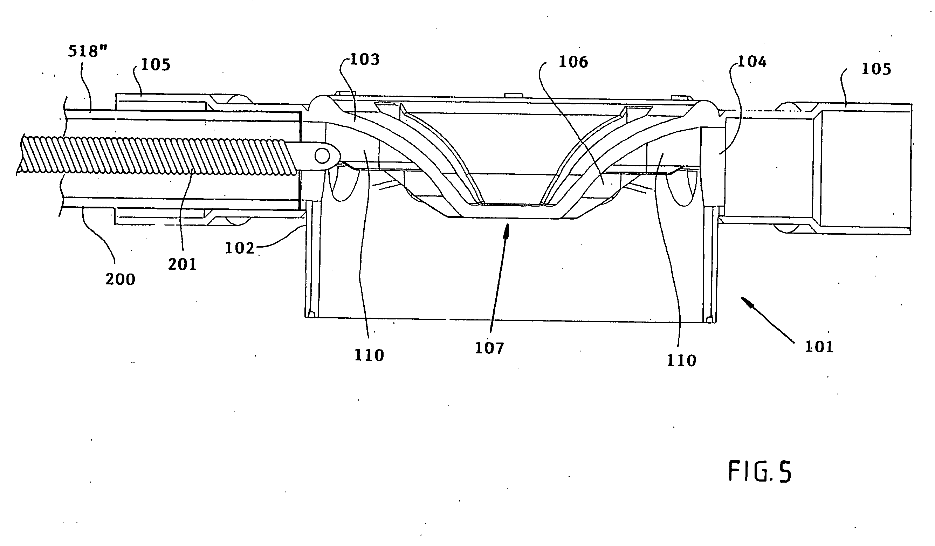

Figure 5 shows a second embodiment of a box according to the invention. The box 101 for instance is a distribution junction box suitable to be attached in the ceiling of a room, or an alternative first box member as a part of the distribution junction box 1 according to the first embodiment of the invention. The box 101 is provided with a cylindrical circumferential wall 102 and a bottom 103, wherein in this exemplary embodiment the circumferential wall 102 is provided with twelve passage openings 104. Although in the exemplary embodiment shown the passage openings 104 are provided with protruding spouts 105 at the outside of the circumferential wall 102, the invention is not limited thereto and the spouts may also be left out. The passage openings 104 are suitable for allowing a draw spring (not shown in the figures) through. At the inside the spouts 105 are stepped in axial direction in order to accommodate two sizes of pipe, for instance 5/8" and 3/4" of rigid PVC pipe. In this example a 5/8" pipe 200 is inserted into one spout 105.

The box 101 is provided with ribs 106 for counteracting movement of the draw spring in circumferential direction in the box 101, and for guiding the draw spring in the correct spout, which ribs 106 extend in radial direction up to the wall 102 of the box 101.

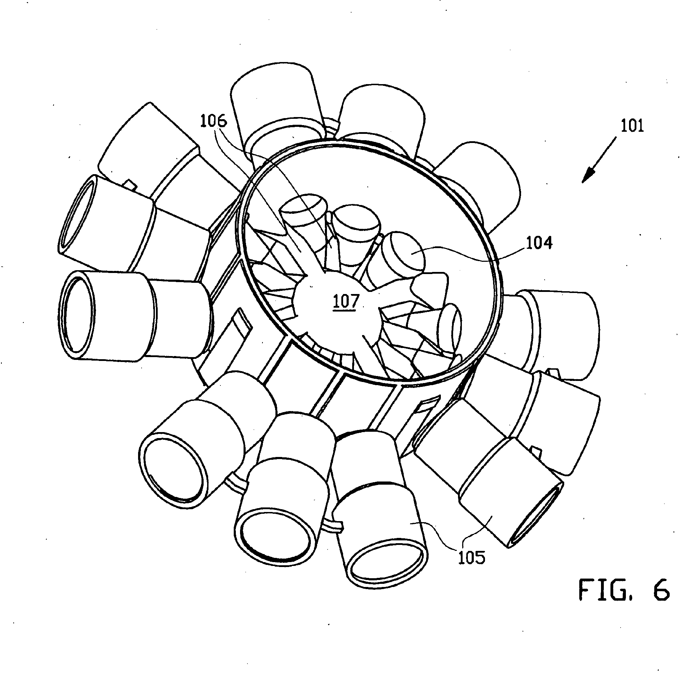

As can clearly be seen in figure 6, the box 101 contains for each passage opening 104 a relating pair of ribs 106, so that an optimal guidance of a draw spring 201 to be inserted through the passage opening 104 can be realised. In the embodiment shown, such a pair of ribs 106 and the bottom 103 form a duct, which in the embodiment shown narrows towards the centre and at the bottom side ascends towards the centre. In this way a proper guidance of the draw spring 201 is realised when it is inserted from the outside of the box 101 into and through a passage opening 104. Here the ribs 106 smoothly, particularly without discontinuity, change into the bottom 103 of the box 101, so that an even better guidance of a draw spring 201 is realised. Here the dimension of the duct is exactly large enough to be able to accommodate the draw spring 201.

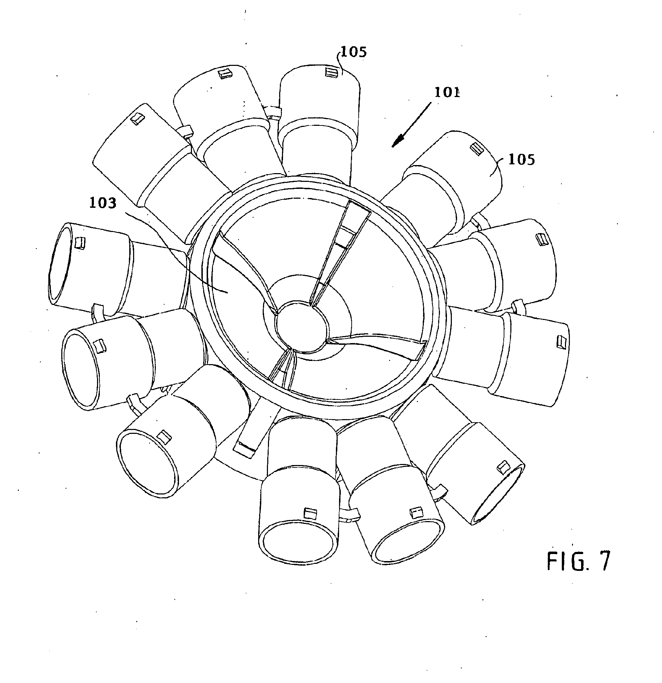

As can clearly be seen in figure 6 and figure 7, the box 101 is provided with an elevation 107 protruding inwardly from the bottom 103 of the box 101, from which elevation 107 the ribs 106 extend, wherein the elevation 107 smoothly, particularly without discontinuity, that means without corner or buckle, changes into the bottom 103 of the box 101.

The first part 110 of the internal bounding surface of the ducts, and preferably the entire internal bounding surface of the ducts is substantially concave from a notional plane through the centre lines of the passage openings 104 or spouts 105, to the bottom 10 of the box 101, having a shape substantially supplementary to a conical shape or tapered shape, wherein the centre line of the cone shape substantially coincides with the centre line of the passage opening 104 or spout 105 in question. The first part of the bounding surface 110 smoothly changes into the internal surface of the inserted tube 201.

The first part 110 of the internal bounding surface of the ducts at the side of the circumferential wall 102, extends in circumferential direction according to a smooth concave curve.

The above description is included to illustrate the operation of preferred embodiments of the invention and not to limit the scope of the invention. Starting from the above explanation many variations that fall within the spirit and scope of the present invention will be evident to an expert.

## Claims

1. Box (1,101) for accommodating wires of electric wirings, comprising a bottom (6,103) and a circumferential wall (7,102) provided with a passage opening (10,104) suitable to allow a draw spring through, and with ribs (40,106) for counteracting movement of the draw spring in circumferenfial direction in the box, **characterized in that** the ribs (40,106) extend up to the circumferential wall (7,102) of the box (1,10), wherein the ribs smoothly change into the bottom (6,103) of the box.

2. Box (1,101) according to claim 1, wherein the box (1,101) contains several passage openings (10,104) and each passage opening contains a relating pair of ribs (40,106).

3. Box (1,101) for accommodating wires of electric wirings, comprising a bottom (6,103) and a circumferential wall (7,102) provided with several passage openings (5,104) suitable to allow a draw spring through, and with ribs for counteracting movement of the draw spring in circumferential direction in the box, which ribs extend up to the circumferential wall of the box, **characterized in that** the box for each passage opening contains a relating pair of ribs (40,106).

4. Box (1,101) according to claim 3, wherein the ribs (40,106) smoothly change into the bottom (6,103) of the box.

5. Box (1,101) according to any one of the preceding claims, wherein the box has been provided with an elevation (6a,107), projecting inwardly from the bottom (6,103) of the box, from which elevation the ribs (40,106) extend, wherein the elevation (6a,107) smoothly changes into the bottom (6,103) of the box.

6. Box (1,101) according to any one of the claims 2, 3 or 4, or claim 5 referring to claim 2, 3 or 4, wherein the pair of ribs (40,106) and the bottom (6,103) form a duct, ascending towards the centre of the box.

7. Box (1,101) according to claim 6, wherein the duct narrows towards the centre of the box.

8. Box (1,101) according to claim 6 or 7, wherein the dimension of the duct is just large enough for accommodating a draw spring.

9. Box (1,101) according to any one of the preceding claims, wherein at least a part of the internal bounding surface of the duct (110) has a concave shape that is substantially supplementary to a conical shape or tapered shape.

10. Box according to any one of the preceding claims, wherein the passage openings (10,104) have been provided with spouts (9,105) extending outward from the wall (7,102) of the box.

11. Box according to claim 10, when depending on claim 6, wherein the internal bounding surface of the duct (110) has a bottom area at the side of the circumferential wall (7,102) that extends at a small angle to the centre line of the spout in question to which the duct connects, wherein the small angle preferably is smaller than 30°, preferably smaller than 20°, preferably smaller than 10°.

12. Box according to claim 10 or 11, when depending on claim 6, wherein the internal bounding surface of the duct (110) at the side of the circumferential wall (7,102) extends in circumferential direction according to a smooth curve, preferably a concave curvature.

13. Box (1,101) according to any one of the previous claims , wherein the circumferential wall at the side facing away from the bottom wall (6,103) has a circumferential edge that defines an access opening (5) to the inside of the box, wherein the circumferential wall has been provided with one or more passages for installation wires that may or may not be closed, wherein the box is divided into a first box member (2) and a second box member (3) to be connected thereto, wherein the division is according to a dividing line situated between the circumferential edge and the passages, wherein the first box member has been provided with the passages, wherein the dividing line preferably extends in a plane parallel to the circumferential edge.

14. Box (1,101) according to claim 13, wherein both box members (2,3) at their respective first and second edge situated near the dividing line have been provided with first and second connection means that cooperate together, wherein the first and second connection means are preferably adapted for mutual connection by a translatory motion from the first box member (2) to the second box member (3), wherein the first and second connection means are preferably adapted for forming a snap connection.

15. Box according to claim 14 wherein the first and second connection means are adapted for allowing both box members (2,3) to rotate with respect to each other.

## Patentansprüche

1. Dose (1, 101) für die Aufnahme von Drähten von Elektroverdrahtungen, enthaltend einen Boden (6, 103) und eine Umfangswand (7, 102), die mit einer Durchgangsöffnung (10, 104) versehen ist, die sich dazu eignet, eine Einzugsspirale hindurchzulassen, und mit Stegen (40, 106), die der Bewegung der Einzugsspirale in Umfangsrichtung in der Dose entgegenwirken, **dadurch gekennzeichnet, dass** sich die Stege (40, 106) bis zur Umfangswand (7, 102) der Dose (1, 101) erstrecken, wobei die Stege sanft in den Boden (6, 103) der Dose übergehen.

2. Dose (1, 101) nach Anspruch 1, wobei die Dose (1, 101) zahlreiche Durchgangsöffnungen (10, 104) aufweist und jede Durchgangsöffnung ein entsprechendes Paar von Stegen (40, 106) enthält.

3. Dose (1, 101) für die Aufnahme von Drähten für Elektroverdrahtungen, enthaltend einen Boden (6, 103) und eine Umfangswand (7, 103), die mit zahlreichen Durchgangsöffnungen (3, 104) versehen ist, die eine Einzugsspirale hindurchlassen, und mit Stegen (40, 106), die der Bewegung der Einzugsspirale in Umfangsrichtung in der Dose entgegenwirken, wobei sich die Stege bis zur Umfangswand der Dose erstrecken, **dadurch gekennzeichnet, dass** die Dose für jede Durchgangsöffnung ein entsprechendes Paar von Stegen (40, 106) enthält.

4. Dose (1, 101) nach Anspruch 3, bei der die Stege (40, 106) sanft in den Boden der Dose (6, 103) übergehen.

5. Dose (1, 101) nach einem der vorhergehenden Ansprüche, wobei die Dose mit einer Erhebung (6a, 107) versehen ist, die nach innen vom Boden (6, 103) der Dose hervorragt, wobei sich von dieser Erhebung die Stege (40, 106) erstrecken und die Erhebung (6a, 107) sanft in den Boden (6, 103) der Dose übergeht.

6. Dose (1, 101) nach einem der vorhergehenden Ansprüche 2, 3 oder 4 oder Anspruch 5 mit Bezug auf Anspruch 2, 3 oder 4, bei der das Paar der Stege (40, 106) und der Boden (6, 103) einen Kanal bilden, der zur Mitte der Dose ansteigt.

7. Dose (1, 101) nach Anspruch 6, bei der sich der Kanal zur Mitte der Dose verjüngt.

8. Dose (1, 101) nach Anspruch 6 oder 7, bei der die Abmessung des Kanals ausreichend groß ist, um eine Einzugsspirale aufzunehmen.

9. Dose (1, 101) nach einem der vorhergehenden Ansprüche, bei der wenigstens ein Teil der inneren Grenzfläche des Kanals (110) eine konkave Form hat, die im wesentlichen eine konische Form oder kegelförmige Form ergänzt.

10. Dose nach einem der vorhergehenden Ansprüche, bei der die Durchgangsöffnungen (10, 104) mit Mündungen (9, 105) versehen sind, die sich nach außen von der Wand (7, 102) der Dose erstrecken.

11. Dose nach Anspruch 10, bei der bei Abhängigkeit von Anspruch 6 die innere Grenzfläche des Kanals (110) eine Bodenfläche an der Seite der Umfangswand (7, 102) hat, die sich in einem kleinen Winkel zur Mittellinie der jeweiligen Mündung erstreckt, mit der der Kanal verbunden ist, wobei der kleine Winkel vorzugsweise kleiner als 30°, vorzugsweise kleiner als 20° und vorzugsweise kleiner als 10° ist.

12. Dose nach Anspruch 10 oder 11, bei der sich bei Abhängigkeit von Anspruch 6 die innere Grenzfläche des Kanals (110) auf der Seite der Umfangswand (7, 103) in Umfangsrichtung gemäß einer sanften Krümmung, vorzugsweise einer konkaven Krümmung, erstreckt.

13. Dose (1, 101) nach einem der vorhergehenden Ansprüche, bei der die Umfangswand auf der Seite, die der Bodenwand (6, 103) abgewandt ist, einen Umfangsrand hat, der eine Zugangsöffnung (5) in das Innere der Dose definiert, wobei die Umfangswand mit einem oder mehreren Durchgängen für Installationsdrähte versehen ist, die geschlossen oder nicht geschlossen sein können, wobei die Dose in ein erstes Dosenelement (2) und ein mit diesem zu verbindendes zweites Dosenelement (3) unterteilt ist, wobei die Unterteilung gemäß einer Teilungslinie eingerichtet ist, die sich zwischen dem Umfangsrand und den Durchgängen befindet, wobei das erste Dosenelement mit den Durchgängen versehen ist, wobei sich die Teilungslinie vorzugsweise in einer Ebene parallel zum Umfangsrand erstreckt.

14. Dose (1, 101) nach Anspruch 13, wobei beide Dosenelemente (2, 3) an ihrem jeweiligen ersten und zweiten Rand, der sich in der Nähe der Teilungslinie befindet, mit einer erste und zweiten Verbindungseinrichtung versehen sind, die zusammenwirken, wobei die erste und zweite Verbindungseinrichtung vorzugsweise für eine wechselseitige Verbindung durch eine Translationsbewegung vom ersten Dosenelement (2) zum zweiten Dosenelement (3) eingerichtet sind, wobei die erste und die zweite Verbindungseinrichtung dazu eingerichtet sind, dass sie eine Rastverbindung herstellen.

15. Dose nach Anspruch 14, bei der die erste und die zweite Verbindungseinrichtung dazu eingerichtet sind, es den Dosenelementen (2, 3) zu gestatten, sich im Bezug zueinander zu drehen.

## Revendications

1. Boîtier (1, 101) pour loger des fils de câblages électriques, comprenant un fond (6, 103) et une paroi circonférentielle (7, 102) pourvue d'une ouverture de passage (10, 104) appropriée pour permettre le passage d'un ressort de traction à travers celle-ci, et de nervures (40, 106) pour empêcher un mouvement du ressort de traction dans la direction circonférentielle dans le boîtier, **caractérisé en ce que** les nervures (40, 106) s'étendent jusqu'à la paroi circonférentielle (7, 102) du boîtier (1, 101), dans lequel les nervures changent régulièrement ou doucement dans le fond (6, 103) du boîtier.

2. Boîtier (1, 101) selon la revendication 1, dans lequel le boîtier (1, 101) contient plusieurs ouvertures de passage (10, 104) et chaque ouverture de passage contient une paire de nervures (40, 106) associées.

3. Boîtier (1, 101) pour loger des fils de câblages électriques, comprenant un fond (6, 103) et une paroi circonférentielle (7, 102) pourvue de plusieurs ouvertures de passage (5, 104) appropriées pour permettre le passage d'un ressort de traction à travers celles-ci, et de nervures (40, 106) pour empêcher un mouvement du ressort de traction dans la direction circonférentielle dans le boîtier, lesquelles nervures s'étendent jusqu'à la paroi circonférentielle du boîtier, **caractérisé en ce que** le boîtier, pour chaque ouverture de passage, contient une paire de nervures (40, 106) associées.

4. Boîtier (1, 101) selon la revendication 3, dans lequel les nervures (40, 106) changent régulièrement ou doucement dans le fond (6, 103) du boîtier.

5. Boîtier (1, 101) selon l'une quelconque des revendications précédentes, dans lequel le boîtier a été pourvu d'une élévation (6a, 107) faisant saillie vers l'intérieur à partir du fond (6, 103) du boîtier, de laquelle élévation les nervures (40, 106) s'étendent, dans lequel l'élévation (6a, 107) change régulièrement ou doucement dans le fond (6, 103) du boîtier.

6. Boîtier (1, 101) selon l'une quelconque des revendications 2, 3 ou 4, ou la revendication 5 faisant référence à la revendication 2, 3 ou 4, dans lequel la paire de nervures (40, 106) et le fond (6, 103) forment un conduit montant vers le centre du boîtier.

7. Boîtier (1, 101) selon la revendication 6, dans lequel le conduit se rétrécit vers le centre du boîtier.

8. Boîtier (1, 101) selon la revendication 6 ou 7,
dans lequel la dimension du conduit est juste suffisamment grande pour recevoir un ressort de traction.

9. Boîtier (1, 101) selon l'une quelconque des revendications précédentes, dans lequel au moins une partie de la surface de délimitation interne du conduit (110) a une forme concave qui est sensiblement complémentaire d'une forme conique ou d'une forme effilée.

10. Boîtier selon l'une quelconque des revendications précédentes, dans lequel les ouvertures de passage (10, 104) ont été pourvues de goulottes (9, 105) s'étendant à l'extérieur de la paroi (7, 102) du boîtier.

11. Boîtier selon la revendication 10, lorsqu'elle dépend de la revendication 6, dans lequel la surface de délimitation interne du conduit (110) a une zone de fond du côté de la paroi circonférentielle (7, 102) qui s'étend selon un petit angle par rapport à la ligne centrale du goulotte en question auquel le conduit est relié, dans lequel le petit angle est de préférence inférieur à 30°, de préférence inférieur à 20°, de préférence inférieur à 10°.

12. Boîtier selon la revendication 10 ou 11, lorsqu'elle dépend de la revendication 6, dans lequel la surface de délimitation interne du conduit (110) du côté de la paroi circonférentielle (7, 102) s'étend dans une direction circonférentielle selon une courbe douce, de préférence une courbure concave.

13. Boîtier (1, 101) selon l'une quelconque des revendications précédentes, dans lequel la paroi circonférentielle du côté orienté à l'opposé de la paroi de fond (6, 103) a un bord circonférentiel qui définit une ouverture d'accès (5) à l'intérieur du boîtier, dans lequel la paroi circonférentielle a été pourvue d'un ou de plusieurs passages pour l'installation de fils qui peuvent être ou ne pas être fermés, dans lequel le boîtier est divisé en un premier élément de boîtier (2) et un deuxième élément de boîtier (3) destiné à être relié à celui-ci, dans lequel la division est effectuée selon une ligne de division située entre le bord circonférentiel et les passages, dans lequel le premier élément de boîtier a été pourvu des passages, dans lequel la ligne de division s'étend de préférence dans un plan parallèle au bord circonférentiel.

14. Boîtier (1, 101) selon la revendication 13, dans lequel les deux éléments de boîtier (2, 3), au niveau de leur premier et deuxième bords respectifs situés à proximité de la ligne de division, ont été pourvus de premiers et deuxièmes moyens de liaison qui coopèrent les uns avec les autres, dans lequel les premiers et deuxièmes moyens de liaison sont de préférence adaptés pour une liaison mutuelle par un mouvement de translation du premier élément de boîtier (2) vers le deuxième élément de boîtier (3), dans lequel les premiers et deuxièmes moyens de liaison sont de préférence adaptés pour former une liaison par pression ou encliquage.

15. Boîtier selon la revendication 14, dans lequel les premiers et deuxièmes moyens de liaison sont adaptés pour permettre aux deux éléments de boîtier (2, 3) de tourner l'un par rapport à l'autre.
